# EUROPÄISCHE PATENTSCHRIFT

(11) **EP 0 689 954 B1**
(45) Veröffentlichungstag und Bekanntmachung des Hinweises auf die Patenterteilung: **27.10.1999**
(21) Anmeldenummer: 95109813.6
(22) Anmeldetag: 23.06.1995
(51) Int. Cl.: B60N 2/30

(54) **Sitzanordnung, insbesondere für den Lade- bzw. Fahrgastraum eines Kraftfahrzeuges**
Seat arrangement, especially for the load or passenger compartment of a motor vehicle
Aménagement de siège, notamment pour le compartiment de chargement ou de passenger d'un véhicule automobile

(30) Priorität: 30.06.1994 DE 4422920
(43) Veröffentlichungstag der Anmeldung: 03.01.1996
(73) Patentinhaber: ADAM OPEL AG, 65423 Rüsselsheim (DE)
(72) Erfinder: Leopold, Frank, Dipl.-Designer, D-65195 Wiesbaden (DE)
(74) Vertreter: Bergerin, Ralf, Dipl.-Ing.

(56) Entgegenhaltungen:
- EP-A- 0 434 636
- WO-A-83/03081
- DE-A- 2 849 985
- DE-B- 1 286 415
- FR-A- 2 691 681
- US-A- 3 151 906
- PATENT ABSTRACTS OF JAPAN vol. 7, no. 159 (M-228) [1304] , 13.Juli 1983 & JP-A-58 067528 (FUJI JUKOGYO), 22.April 1983,

## Beschreibung

Die Erfindung betrifft eine Sitzanordnung, insbesondere für den Lade- bzw. Fahrgastraum eines Kraftfahrzeuges, nach dem Oberbegriff des Patentanspruches 1.

Eine Sitzanordnung der gattungsgemäßen Art ist durch die DE-OS 28 49 985 bekannt. Bei dieser bekannten Sitzanordnung ist ein aus einem Sitzteil und einer Rückenlehne bestehender Sitz in einer dritten Sitzreihe im Bereich des Laderaums eines Kraftfahrzeugs angeordnet. Zur Vergroßerung des Laderaums kann dieser Sitz um eine an seinem Vorderteil am Fahrzeugboden vorgesehene Querachse nach vorn geschwenkt werden. Dabei ist die Rückenlehne mittels eines Hebelmechanismus in eine Lage überführbar, bei der diese zusammen mit dem Sitzteil eine durchlaufende ebene Fläche mit dem Fahrzeugboden bildet.

Eine derartige Sitzanordnung ist zwar relativ einfach, sie kann jedoch nur bei Kraftfahrzeugen mit genügend Platz für die oben beschriebene Entfaltung der Rückenlehne Anwendung finden.

Eine Weitere Sitzanordnung der genannten Art ist in der DE-B-12 86 415 beschrieben. Bei dieser Sitzanordnung sind eine oder mehrere umwandelbare Sitzbänke vorgesehen, die durch Schwenkung nach vorn jeweils zwei nebeneinander liegende Abschnitte der Ladefläche bilden. Diese Abschnitte sind über eine Scharnierachse miteinander klappbar verbunden und gemeinsam um eine weitere, parallel zu der Scharnierachse angeordnete und parallel zu sich selbst verschiebbare Achse schwenkbar ausgebildet.

Eine solche Sitzanordnung beansprucht ebenfalls viel Platz im Kraftfahrzeug und ist außerdem sehr umständlich in der Handhabung, da beide Abschnitte bei der Umwandlung in eine Sitzbank gleichzeitig gehalten bzw. geführt werden müssen.

Der vorliegenden Erfindung liegt die Aufgabe zugrunde, eine gattungsgemäße Sitzanordnung zu schaffen, welche relativ einfach in die Nichtgebrauchslage überführbar ist, dabei weniger Raum beansprucht sowie eine höhere Sicherheit und einen besseren Komfort für die Fahrgäste bietet.

Diese Aufgabe wird erfindungsgemäß durch die kennzeichnenden Merkmale des Patentanspruches 1 gelöst.

Ein besonderer Vorteil der Erfindung besteht darin, daß der umklappbare Sitz als ein komfortabler Sitz mit einer Kopfstütze ausgebildet werden kann, der in der Nichtgebrauchslage in relativ flache Vertiefungen am Fahrzeugboden bequem versenkbar ist.

Zur Erhöhung der Sicherheit bei der Benutzung des klappbaren Sitzes ist vorgesehen, daß seine Rückenlehne in der etwa vertikalen Gebrauchslage an der Verbindungsstelle mit dem Sitzteil zusätzlich verriegelbar ist. Diese Verriegelung kann an sich bekannte Mittel wie Rasten, Rastbolzen oder Riegel aufweisen. Nach der Schwenkung des gesamten Sitzes um die Querachse nach vorn kann diese Verriegelung gelöst werden, damit der Sitz in die am Fahrzeugboden vorgesehenen Vertiefungen versenkt werden kann.

Um ein Vorklappen der entriegelten Rückenlehne gegen das Sitzteil zu verhindern, ist erfindungsgemäß vorgesehen, daß an der Rückenlehne im Bereich des Drehgelenkes ein Anschlag vorgesehen ist, welcher in der etwa vertikalen Gebrauchslage der Rückenlehne mit einem Gegenanschlag am Sitzteil zusammenwirkt. Der Anschlag und der Gegenanschlag können dabei ineinander lösbar verrastbar ausgebildet sein und damit eine zusätzliche Verriegelung darstellen.

Falls am Fahrzeugboden keine Vertiefung für die Rückenlehne vorhanden ist, kann zur Vergrößerung des Laderaums die Rückenlehne bei der nach vorn geschwenkten und nach hinten geschobenen Position des Sitzteils in eine etwa senkrechte Lage überführt und in dieser Lage mittels an sich bekannter Verriegelungen am Fahrzeugaufbau verankert werden. Bei dieser Ausführung bietet die senkrecht aufgestellte Rückenlehne mit ihrer steifen, durch Blech- oder Kunststoffteile gebildeten Rückfläche z. B. bei einem Unfall einen wirksamen Schutz vor dem im Laderaum befindlichen Ladegut.

Damit der Sitz bei der Überführung in die Nichtgebrauchslage während des Vorklappens oder danach auch nach hinten verschoben werden kann, sind gemäß der Erfindung beiderseits des Sitzteils in Längsrichtung des Kraftfahrzeugs ausgerichtete, mit dem Fahrzeugboden fest verbundene Führungsschienen zur Lagerung der Querachse vorgesehen. Durch diese Verschiebung der Querachse und somit auch des Sitzteils nach hinten kann auch die für dieses Sitzteil am Fahrzeugboden vorgesehene Vertiefung weiter hinten direkt unter dem aufgestellten Sitz angeordnet sein, so daß die erfindungsgemäße Sitzanordnung zur Überführung in die Nichtgebrauchslage weniger Raum beansprucht.

Der dadurch gewonnene zusätzliche Raum am Fahrzeugboden kann zur Vergrößerung der Vertiefung zur Aufnahme der Rückenlehne genutzt werden. Dadurch kann auch die Rückenlehne komfortabler und höher ausgebildet bzw. mit einer Kopfstütze versehen sein.

Die Vertiefung für die Rückenlehne kann auch teilweise unter einem vor dem klappbaren Sitz befindlichen Sitz angeordnet sein, wenn der vor dem klappbaren Sitz befindliche Sitz nach vorn verschiebbar und mit einem zu seiner Rückenlehne hin nach oben klappbaren Sitzteil ausgebildet ist. Die Rückenlehne kann dabei vorteilhafterweise in der nach vorn geschobenen Position in eine vertikale Lage überführbar und in dieser Lage arretierbar sein.

Zur Vereinfachung der Konstruktion des nach vorn verschiebbaren Sitzes kann dieser auf einem Tragrahmen aufgestellt sein, welcher in am Fahrzeugboden im Bereich der Vertiefung für die klappbare Rückenlehne angeordneten Schienen nach vorn verfahrbar ist. Der Tragrahmen kann auch als eine mit dem Sitz fest verbundene, auf Rollen und/oder in Schienen verfahrbare Platte ausgebildet sein.

In Ausgestaltung der Erfindung ist vorgesehen, daß zur Lagerung der Querachse beiderseits des Sitzteils in Längsrichtung des Kraftfahrzeugs ausgerichtete, mit dem Fahrzeugboden fest verbundene Führungsschienen vorgesehen sind. Diese Führungsschienen können als an sich bekannte Sitzführungsschienen ausgebildet und beispielsweise beiderseits der Vertiefung mit dem Fahrzeugboden verbunden sein.

Weiterhin ist erfindungsgemäß vorgesehen, daß die in den Führungsschienen geführte Querachse sich über die gesamte Breite des Sitzteils erstreckt und an beiden Enden mit jeweils einem in den Führungsschienen verschiebbar geführten Führungsteil, das mindestens eine drehbar gelagerte Rolle aufweist, verbunden ist. Die Führungsschienen zur Aufnahme dieser Rollen sind dabei mit einem entsprechenden Profil, beispielsweise einem im Querschnitt C-förmigen Profil, ausgebildet. Alternativ zu dieser Ausführung kann das Führungsteil als eine Gleitschiene ausgebildet oder mit Gleitelementen, beispielsweise aus Kunststoff, versehen sein.

Die Verbindung zwischen Querachse und Führungsteil kann unterschiedlich gestaltet sein. Nach einer bevorzugten Ausführungsform ist die Querachse einerseits fest mit den Führungsteilen und andererseits drehbar mit einem Rahmen des Sitzes verbunden. Dies ermöglicht es, die Querachse mit den Führungsteilen als eine stabile fahrbare Konstruktion auszubilden.

Gemäß einer anderen Ausbildung der Verbindung kann die Querachse fest mit dem Rahmen des umklappbaren Sitzes verbunden sein, wobei die Führungsteile an den Enden dieser Querachse drehbar gelagert sind. Diese Ausbildung ist beispielsweise dann vorteilhaft, wenn die Querachse zusätzlich als eine stabile Querverbindung des Rahmens genutzt werden soll.

Die Erfindung läßt zahlreiche Ausführungsformen zu. Zur weiteren Verdeutlichung ihres Grundprinzips sind einige davon in den Zeichnungen dargestellt und nachfolgend beschrieben. Die Zeichnungen zeigen teilweise schematisch in
- Fig. 1: eine Seitenansicht der erfindungsgemäßen Sitzanordnung mit einem Sitz in der Gebrauchslage, in der nach vorn geschwenkten Position und in der Nichtgebrauchslage (versenkt im Fahrzeugboden;
- Fig. 2: eine vereinfachte Perspektivische Ansicht des umklappbaren Sitzes nach Fig. 1, mit einer in Führungsschienen verschiebbaren Querachse;
- Fig. 3: eine Perspektivische Darstellung des Fahrzeugbodens mit daran befestigten Führungsschienen für die verschiebbaren Sitze;
- Fig. 4: eine perspektivische Darstellung des Fahrzeugbodens in anderer Ausbildung mit im Fahrzeugboden angeordneten Vertiefungen für den umklappbaren Sitz in der Nichtgebrauchslage;
- Fig. 5: eine Ansicht von hinten auf den umklappbaren Sitz nach Fig. 1, dessen Rückenlehne seitlich am Fahrzeugaufbau verriegelt ist;
- Fig. 6: eine perspektivische Darstellung des Lade- bzw. Fahrgastraums mit der Sitzanordnung nach Fig. 1, mit einem Sitz in der Nichtgebrauchslage;
- Fig. 7 bis Fig. 9: unterschiedliche Varianten der Benutzung der Sitzanordnung nach Fig. 1 bei der Beförderung von Fahrgästen bzw. Ladegut;
- Fig. 10 bis Fig. 12: perspektivische Ansichten der in Fig. 7 bis Fig. 9 dargestellten Varianten der Benutzung der Sitzanordnung nach Fig. 1.

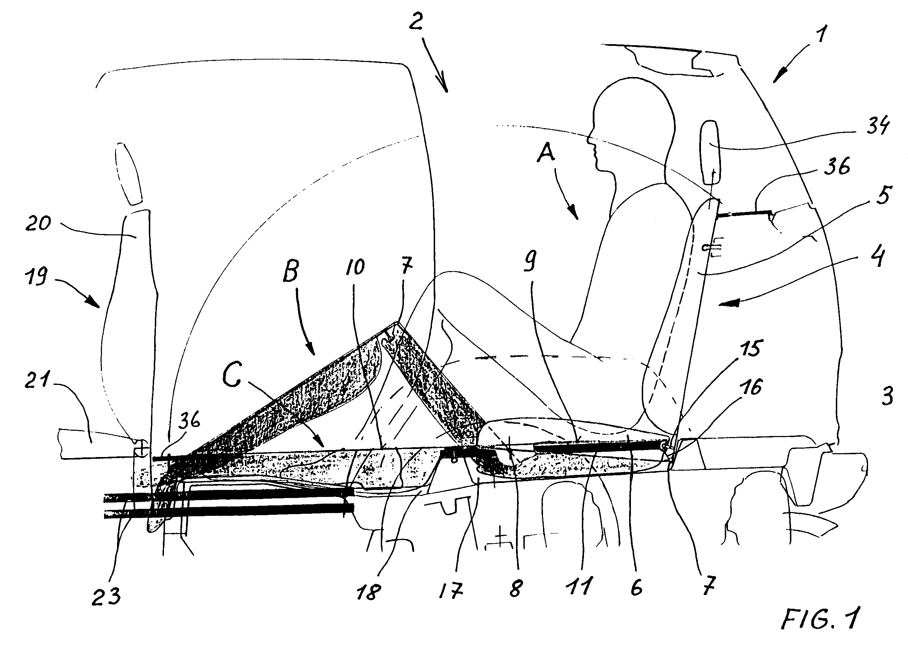

Bei der in Fig. 1 dargestellten Sitzanordnung besteht der umklappbare Sitz 4 im wesentlichen aus einer Rückenlehne 5 und einem mittels eines Drehgelenkes 7 mit der Rückenlehne 5 verbundenen Sitzteil 6, das im vorderen Bereich eine Querachse 8 zur Schwenkung nach vorn aufweist. Die Querachse 8 ist in Führungsschienen 11 verschieblich gelagert und kann zusammen mit dem Sitzteil 6 bei der Überführung des Sitzes 4 aus der Gebrauchslage A in die Nichtgebrauchslage C nach hinten verschoben werden. In der etwa vertikalen Gebrauchslage ist die Rückenlehne 5 durch eine im Bereich des Drehgelenkes 7 angeordnete zusätzliche Verriegelung (Anschlag 15, Gegenanschlag 16) mit dem Sitzteil 6 verbunden.

Zur Überführung des Sitzes 4 in die Nichtgebrauchslage C wird zunächst der gesamte Sitz 4 um die Querachse 8 nach vorn in die Zwischenlage B geschwenkt. Dann nach der Lösung der Verrastung bzw. Verriegelung im Bereich des Drehgelenkes 7 kann das Sitzteil 6 bei gleichzeitigem Drehen um die Querachse 8 nach hinten verschoben werden, bis die Rückenlehne 5 und das Sitzteil 6 in die dafür am Fahrzeugboden 3 vorgesehenen Vertiefungen 17, 18 gelangen. Dabei bilden die Rückflächen 9 und 10 der Rückenlehne 5 und des Sitzteils 6 eine mit dem Fahrzeugboden 3 annähernd ebene Fläche. Die an der Rückenlehne 5 drehbar gelagerte Hutablage 36 verlängert diese ebene Fläche bis zum Sitz 19.

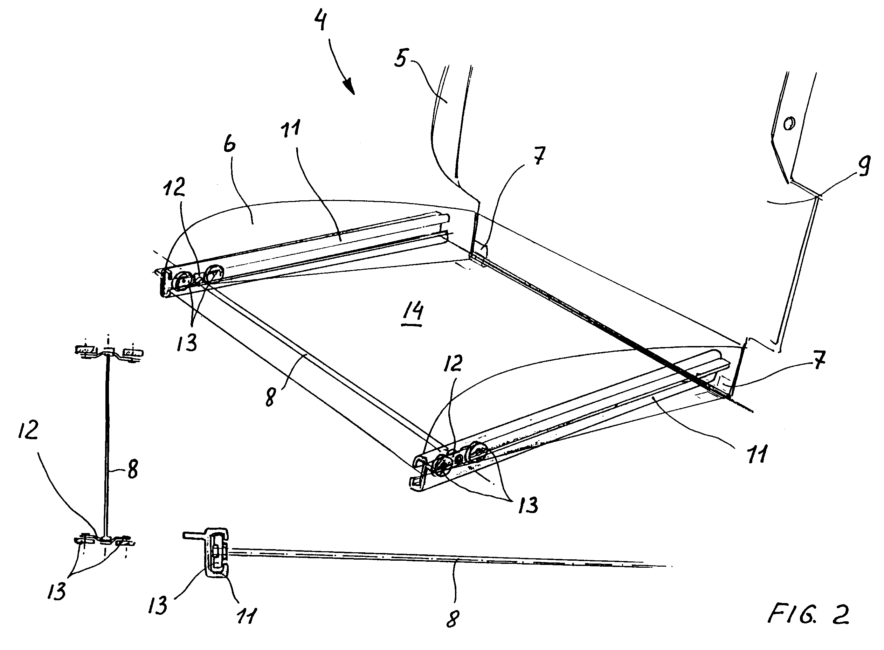

Die Fig. 2 verdeutlicht die verschiebbare Lagerung der Querachse 8, die mit einem Rahmen 14 des Sitzteils 6 drehbar verbunden ist. Die Querachse 8 weist an beiden Enden jeweils ein Führungsteil 12 auf, das jeweils zwei Rollen 13 lagert. Die Querachse 8 ist mittels dieser Rollen 13 in den etwa C-förmig ausgebildeten und mit dem Fahrzeugboden 3 verbundenen Führungsschienen 11 verfahrbar.

Die Fig. 2 zeigt auch die gelenkige Verbindung (Drehgelenke 7) der Rückenlehne 5 mit dem Sitzteil 6 und die durch ein ebenes Blech- oder Kunststoffteil gebildete Rückfläche 9 der Rückenlehne 5.

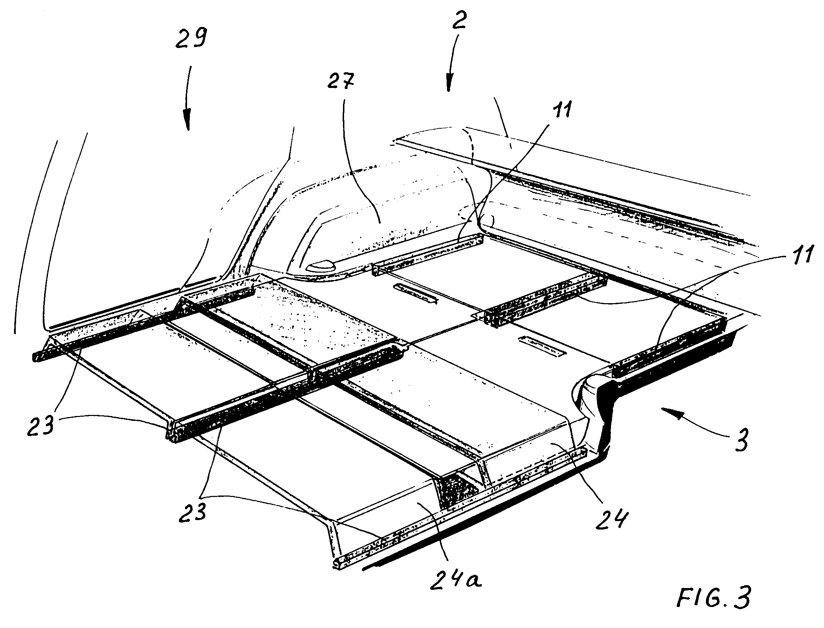

Die Anordnung der Führungsschienen 11 für den umklappbaren Sitz 4 sowie der Schienen 23 für eine verfahrbare Platte 24, die einen vor dem umklappbaren Sitz 4 angeordneten Sitz 19 (nicht dargestellt) trägt, ist aus Fig. 3 ersichtlich. Dabei ist von den Führungsschienen 11 für die umklappbaren Sitze 4 (nicht dargestellt) im Bereich des Laderaums 2 jeweils eine am Radkasten 27 und eine in der Mitte des Laderaums 2 auf dem Fahrzeugboden 3 angeordnet. Die Schienen 23 sind im Fahrgastraum 29 jeweils im Bereich der Karosserieseitenwand und in der Mitte des Fahrgastraumes 29 am Fahrzeugboden 3 angeordnet. Mit der Bezugsziffer 24a ist die Platte 24 in der nach vorn geschobenen Stellung gezeigt.

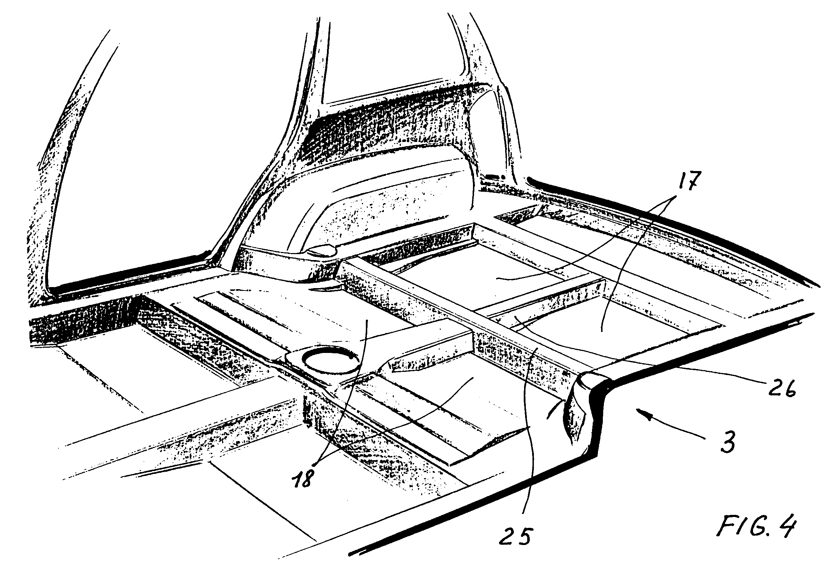

Die in Fig. 4 dargestellten Vertiefungen 17, 18 zur Aufnahme der Sitze 4 (nicht gezeigt) in der Nichtgebrauchslage sind räumlich zwischen den in Fig. 3 gezeigten Führungsschienen 11 angeordnet, wobei bei dieser Ausführung die Führungsschienen 11 an den Seitenwänden der Vertiefungen 17, 18 angebracht werden können. Die Vertiefungen sind voneinander durch einen Querträger 25 und einen Längsträger 26 getrennt. Eine derartige Ausbildung versteift den Fahrzeugboden 3, wodurch u. a. die Sicherheit für die Fahrgäste bei einem Unfall erhöht wird.

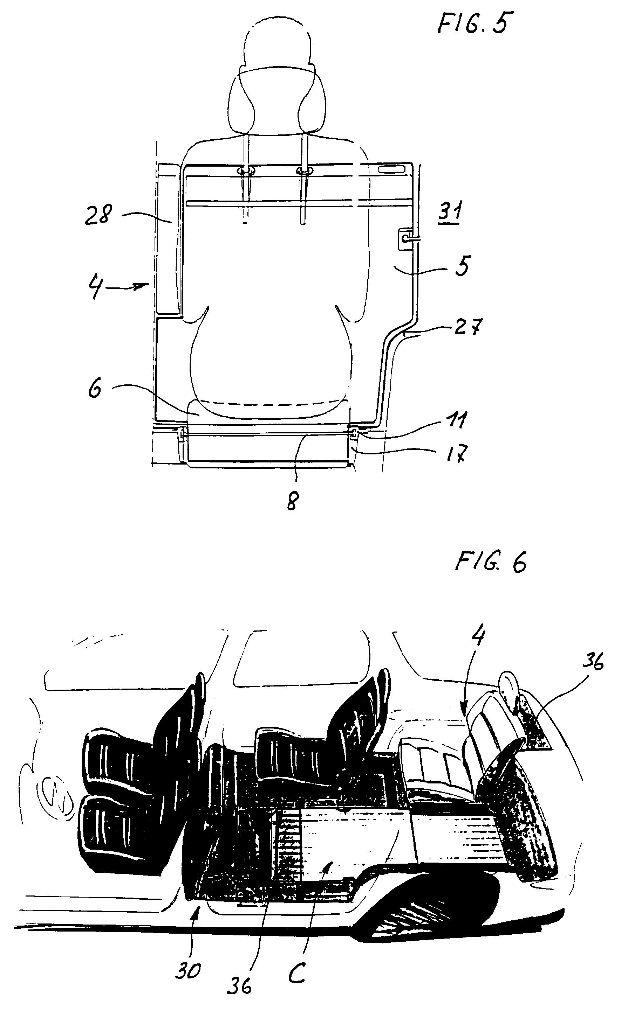

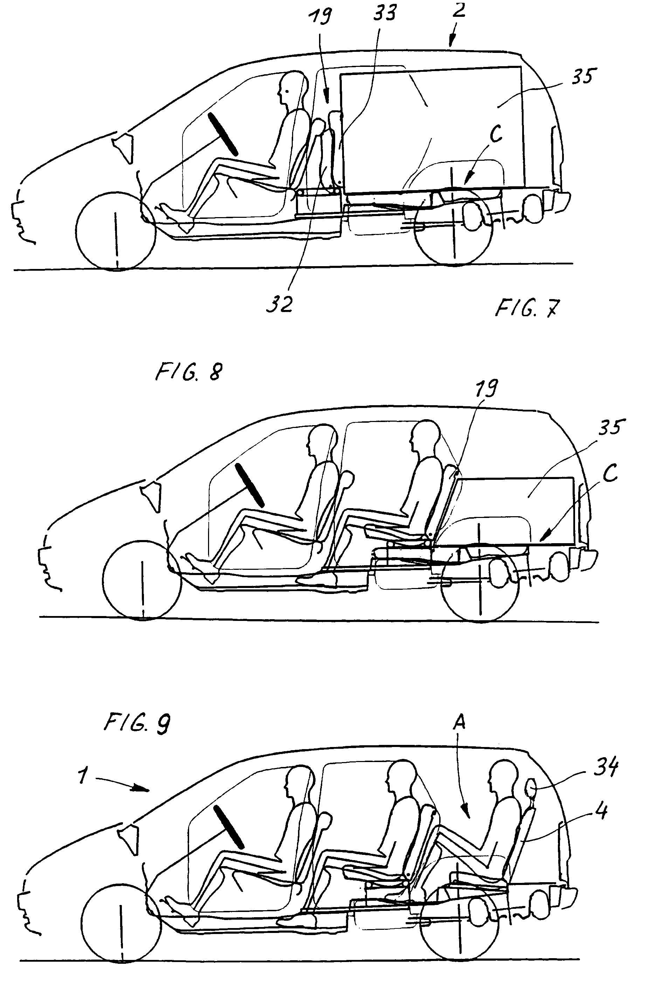

Die Rückenlehne 5 ist gemäß Fig. 5 in der Gebrauchslage des Sitzes 4 üblicherweise seitlich am Fahrzeugaufbau 31 oberhalb des Radkastens 27 verriegelt. In diesem Bereich ist die Rückenlehne 5 breiter als im Bereich des Radkastens 27 gestaltet, um aus Komfortgründen die volle Breite des Laderaums 2 zu nutzen. Auf der gegenüberliegenden, der Mitte des Laderaums 2 zugewandten Seite der Rückenlehne 5 ist eine an der Rückenlehne 5 schwenkbar gelagerte Armlehne 28 vorgesehen, die bei der Überführung des Sitzes 4 in die Nichtgebrauchslage weggeklappt oder entfernt werden kann.

Weiterhin ist in Fig. 5 die Befestigung der Führungsschienen 11 an den Seitenwänden der Vertiefung 17 sowie die verschiebbare Lagerung der Querachse 8 in den Führungsschienen 11 gezeigt.

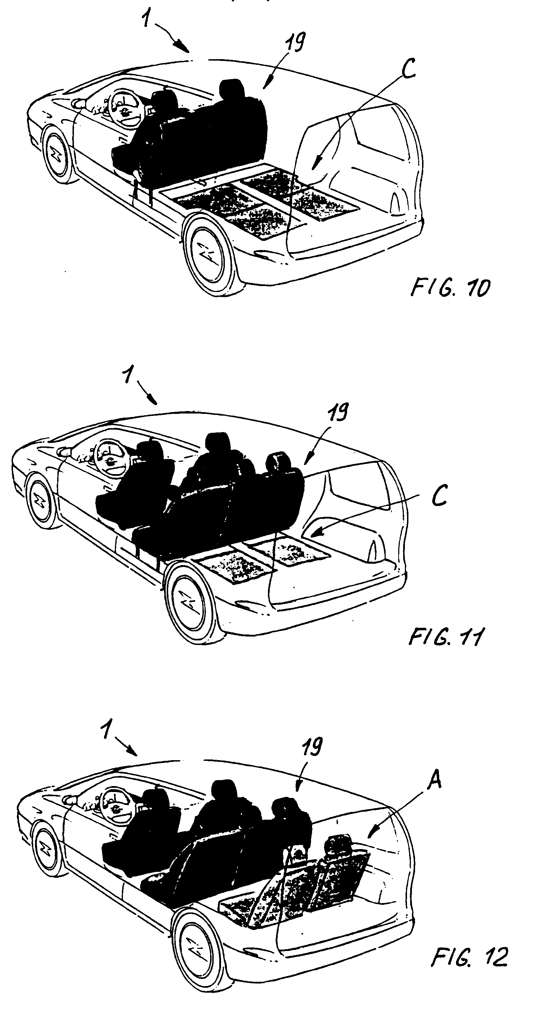

Die Fig. 6 zeigt einen Blick in das Innere des Lade- bzw. Fahrgastraumes des Kraftfahrzeugs 1, bei dem sich ein umklappbarer Sitz 4 in der Nichtgebrauchslage C befindet. Ein vor dem umgeklappten Sitz 4 befindlicher Sitz 30 ist ebenfalls durch nicht dargestellte Schwenkarme nach vorn geklappt, um die Überführung des Sitzes 4 in die Nichtgebrauchslage C zu ermöglichen.

Bei der Sitzanordnung gemäß Fig. 7 ist der vor dem in die Nichtgebrauchslage C umgeklappten Sitz 4 befindliche Sitz 19 mit einem nach oben geschwenkten Sitzteil 32 in einer nach vorn geschobenen Position dargestellt. Die Rückenlehne 33 ist dabei senkrecht gestellt und verriegelt. Bei einer derartigen Aufstellung des Sitzes 19 kann im Laderaum 2 eine größtmögliche Ladung 35 befördert werden.

Die Beförderung von Ladegut im Laderaum sowie von Fahrgästen auf der zweiten Sitzreihe ist in Fig. 8 gezeigt. Bei dieser Art der Beförderung muß der Sitz 19 zunächst nach vorn geklappt und geschoben werden, damit der hintere Sitz 4 in die Nichtgebrauchslage C überführt werden kann. Danach kann der Sitz 19 wieder an seinen ursprünglichen Platz zurückgeschoben werden.

Sollten im Kraftfahrzeug 1 nur Fahrgäste befördert werden, so kann gemäß Fig. 9 der umklappbare Sitz 4 mit seiner Kopfstütze 34 in der Gebrauchstellung A aufgestellt und verankert werden.

In Fig. 10 bis 12 sind perspektivische Ansichten des Lade- bzw. Fahrgastraumes entsprechend der Benutzung der Sitzanordnung nach Fig. 7. bis 9 dargestellt.

## Patentansprüche

1. Sitzanordnung, insbesondere für den Lade- bzw. Fahrgastraum eines Kraftfahrzeuges, mit mindestens einem Sitz (4), welcher zumindest ein Sitzteil (6) aufweist, das gelenkig mit einer in der etwa vertikalen Gebrauchslage am Fahrzeugaufbau verriegelbaren Rückenlehne (5) verbunden ist, wobei der gesamte Sitz (4) zur Überführung in eine Nichtgebrauchslage um eine im vorderen Bereich des Sitzteils (6) angeordnete und in einer etwa waagerechten Ebene nach hinten verschiebbare Querachse (8) nach vorn schwenkbar ist und zumindest das Sitzteil (6) in der nach vorn geschwenkten und nach hinten geschobenen Position des Sitzes (4) mit seiner Rückfläche (9) mit dem Fahrzeugboden (3) eine annähernd ebene Fläche bildet, **dadurch gekennzeichnet**, daß an der Rückenlehne (5) im Bereich des Drehgelenkes (7) ein Anschlag (15) vorgesehen ist, welcher in der etwa vertikalen Gebrauchslage der Rückenlehne (5) mit einem Gegenanschlag (16) am Sitzteil (6) zusammenwirkt, so daß ein Vorklappen der Rückenlehne (5) gegen das Sitzteil (6) verhindert ist, wobei der Anschlag (15) und der Gegenanschlag (16) voneinander lösbar und ineinander verrastbar ausgebildet sind.

2. Sitzanordnung nach Anspruch 1, **dadurch gekennzeichnet**, daß die mittels eines Drehgelenkes (7) mit dem Sitzteil (6) schwenkbar verbundene Rückenlehne (5) in einer nach vorn geschwenkten Position mit ihrer Rückfläche (10) gemeinsam mit der Rückfläche (9) des Sitzteils (6) eine annähernd ebene Fläche bildet.

3. Sitzanordnung nach Anspruch 1 oder 2, **dadurch gekennzeichnet**, daß die Rückflächen (9, 10) von Sitzteil (6) und Rückenlehne (5) durch ebene Blech- oder Kunststoffteile gebildet sind.

4. Sitzanordnung nach einem der Ansprüche 1 bis 3, **dadurch gekennzeichnet**, daß am Fahrzeugboden (3) Vertiefungen (17, 18) zur Aufnahme von Sitzteil (6) und Rückenlehne (5) in der Nichtgebrauchslage vorgesehen sind, wobei die Vertiefung (17) für das Sitzteil (6) unter dem aufgestellten Sitz (4) angeordnet ist.

5. Sitzanordnung nach Anspruch 4, **dadurch gekennzeichnet**, daß die Vertiefung (18) zur Aufnahme der Rückenlehne (5) teilweise unter einem vor dem Sitz (4) befindlichen Sitz (19) angeordnet ist.

6. Sitzanordnung nach Anspruch 5, **dadurch gekennzeichnet**, daß der Sitz (19) auf einem Tragrahmen (22) angeordnet ist, welcher in am Fahrzeugboden (3) im Bereich der Vertiefung (18) angeordneten Schienen (23) nach vorn verfahrbar ist.

7. Sitzanordnung nach Anspruch 6, **dadurch gekennzeichnet**, daß der Tragrahmen (22) als eine auf Rollen und/oder in Schienen verfahrbare Platte (24) ausgebildet ist.

8. Sitzanordnung nach einem der Ansprüche 5 bis 7, **dadurch gekennzeichnet**, daß der Sitz (19) mit einem zu seiner Rückenlehne (20) hin nach oben klappbaren Sitzteil (21) gestaltet und zur Vergrößerung der Ladefläche nach vorn verschiebbar ist, wobei die Rückenlehne (20) in der nach vorn geschobenen Position in eine vertikale Lage überführbar und arretierbar ist.

9. Sitzanordnung nach einem der Ansprüche 1 bis 8, **dadurch gekennzeichnet**, daß zur Lagerung der Querachse (8) beiderseits des Sitzteils (6) in Längsrichtung des Kraftfahrzeugs (1) ausgerichtete, mit dem Fahrzeugboden (3) fest verbundene Führungsschienen (11) vorgesehen sind.

10. Sitzanordnung nach einem der Ansprüche 1 bis 9, **dadurch gekennzeichnet**, daß die Querachse (8) sich über die gesamte Breite des Sitzteils (6) erstreckt und an beiden Enden mit jeweils einem in den Führungsschienen (11) verschiebbar geführten Führungsteil (12) verbunden ist.

11. Sitzanordnung nach einem der Ansprüche 1 bis 10, **dadurch gekennzeichnet**, daß die Querachse (8) an beiden Enden mindestens eine drehbar gelagerte Rolle (13) aufweist und die entsprechenden Führungsschienen (11) zur Aufnahme dieser Rollen (13) ausgebildet sind.

12. Sitzanordnung nach Anspruch 10, **dadurch gekennzeichnet**, daß die Führungsschienen (11) im Querschnitt ein etwa C-förmiges Profil aufweisen.

13. Sitzanordnung nach einem der Ansprüche 1 bis 12, **dadurch gekennzeichnet**, daß die Querachse (8) fest mit einem Rahmen (14) des Sitzes (4) verbunden ist, wobei die Führungsteile (12) an der Querachse (8) drehbar gelagert sind.

14. Sitzanordnung nach einem der Ansprüche 1 bis 12, **dadurch gekennzeichnet**, daß die Querachse (8) einerseits fest mit den Führungsteilen (12) und andererseits drehbar mit dem Rahmen (14) verbunden ist.

15. Sitzanordnung nach einem der Ansprüche 1 bis 14, **dadurch gekennzeichnet**, daß die Rückenlehne (5) in der Gebrauchslage an der Verbindungsstelle mit dem Sitzteil (6) zusätzlich verriegelbar ist.

16. Sitzanordnung nach Anspruch 15, **dadurch gekennzeichnet**, daß die Verriegelung aus an sich bekannten Mitteln wie Rasten, Rastbolzen oder Riegeln besteht.

## Claims

1. Seat assembly, in particular for the load or passenger compartment of a motor vehicle, with at least one seat (4) comprising at least one seat portion (6) which is pivotably connected to a backrest (5) that can be locked to the vehicle body in the approximately vertical working position, wherein the whole seat (4) for transfer to a non-working position is pivotable forwards about a transverse shaft (8) that is arranged in the front region of the seat portion (6) and slidable rearwards in an approximately horizontal plane, and in the forwards-pivoted, rearwards-slid position of the seat (4) at least the seat portion (6) with its rear surface (9) forms with the vehicle floor (3) an almost plane surface, characterised in that on the backrest (5) in the region of the pivot joint (7) is provided a stop (15) which in the approximately vertical working position of the backrest (5) cooperates with a counterstop (16) on the seat portion (6), so that the backrest (5) is prevented from folding forwards towards the seat portion (6), wherein the stop (15) and the counterstop (16) can be released from each other and latched in each other.

2. Seat assembly according to claim 1, characterized in that the backrest (5), which is pivotably connected to the seat portion (6) by means of a pivot joint (7), in a forwards-pivoted position with its rear surface (10) forms together with the rear surface (9) of the seat portion (6) an almost plane surface.

3. Seat assembly according to claim 1 or 2, characterised in that the rear surfaces (9, 10) of seat portion (6) and backrest (5) are formed by plane metal or plastic parts.

4. Seat assembly according to any of claims 1 to 3, characterised in that in the vehicle floor (3) are provided depressions (17, 18) for receiving seat portion (6) and backrest (5) in the non-working position, the depression (17) for the seat portion (6) being arranged under the upright seat (4).

5. Seat assembly according to claim 4, characterised in that the depression (18) for receiving the backrest (5) is arranged partially under a seat (19) which is located in front of the seat (4).

6. Seat assembly according to claim 5, characterised in that the seat (19) is arranged on a supporting frame (22) which is movable forwards in rails (23) arranged on the vehicle floor (3) in the region of the depression (18).

7. Seat assembly according to claim 6, characterised in that the supporting frame (22) is constructed as a plate (24) movable on rollers and/or in rails.

8. Seat assembly according to any of claims 5 to 7, characterised in that the seat (19) is designed with a seat portion (21) that can be folded upwards towards its backrest (20) and is slidable forwards to increase the load area, wherein the backrest (20) in the forwards-slid position can be transferred to and locked in a vertical position.

9. Seat assembly according to any of claims 1 to 8, characterised in that to mount the transverse shaft (8) on both sides of the seat portion (6) are provided guide rails (11) oriented in the longitudinal direction of the motor vehicle (1) and rigidly connected to the vehicle floor (3).

10. Seat assembly according to any of claims 1 to 9, characterised in that the transverse shaft (8) extends across the whole width of the seat portion (6) and is connected at either end to a guide portion (12) guided slidably in the guide rails (11).

11. Seat assembly according to any of claims 1 to 10, characterised in that the transverse shaft (8) at both ends comprises at least one rotatably mounted roller (13) and the corresponding guide rails (11) are designed to receive these rollers (13).

12. Seat assembly according to claim 10, characterised in that the guide rails (11) have an approximately C-shaped profile in cross-section.

13. Seat assembly according to any of claims 1 to 12, characterised in that the transverse shaft (8) is rigidly connected to a frame (14) of the seat (4), wherein the guide portions (12) are mounted rotatably on the transverse shaft (8).

14. Seat assembly according to any of claims 1 to 12, characterised in that the transverse shaft (8) is connected on the one hand rigidly to the guide portions (12) and on the other hand rotatably to the frame (14).

15. Seat assembly according to any of claims 1 to 14, characterised in that the backrest (5) in the working position can additionally be locked to the seat portion (6) at the connecting point.

16. Seat assembly according to claim 15, characterised in that the locking means consists of means known in the art such as catches, latch bars or bolts.

## Revendications

1. Agencement de siège, en particulier pour l'espace de chargement ou l'habitacle d'un véhicule automobile, comprenant au moins un siège (4) avec au moins une partie assise (6) qui est liée de manière articulée à un dossier (5) verrouillable sur la structure du véhicule dans la position d'utilisation sensiblement verticale, le siège (4) complet, pour passer dans une position de non-utilisation, pouvant basculer vers l'avant autour d'un axe transversal (8) qui est disposé dans la région antérieure de la partie assise (6) et peut se déplacer en direction de l'arrière dans un plan sensiblement horizontal et au moins la partie assise (6), dans la position du siège (4) basculée vers l'avant et reculée vers l'arrière, formant avec sa face arrière (9) une surface sensiblement plane avec le plancher (3) du véhicule, caractérisé par le fait qu'il est prévu sur le dossier (5), dans la région de l'articulation (7), une butée (15) qui, dans la position d'utilisation sensiblement verticale du dossier (5), coopère avec une contre-butée (16) sur la partie assise (6) de manière à empêcher un rabattement du dossier (5) en direction de la partie assise (6), la butée (15) et la contre-butée (16) pouvant être amenées en prise et hors de prise l'une avec l'autre.

2. Agencement de siège selon la revendication 1, caractérisé par le fait que le dossier (5) lié avec possibilité de basculement à la partie assise (6) au moyen d'une articulation (7), dans une position basculée vers l'avant, forme avec sa face arrière (10) et avec la face arrière (9) de la partie assise (6) une surface sensiblement plane .

3. Agencement de siège selon la revendication 1 ou 2, caractérisé par le fait que les faces arrières (9, 10) de la partie assise (6) et du dossier (5) sont formées de parties planes en tôle ou en matière plastique.

4. Agencement de siège selon une des revendications 1 à 3, caractérisé par le fait que des cavités (17, 18) sont prévues dans le plancher de véhicule (3) pour recevoir la partie assise (6) et le dossier (5) dans la position de non-utilisation, la cavité (17) pour la partie assise (6) étant disposée sous le siège (4) redressé.

5. Agencement de siège selon la revendication 4, caractérisé par le fait que la cavité (18) recevant le dossier (5) est disposée en partie sous un siège (19) placé devant le siège (4).

6. Agencement de siège selon la revendication 5, caractérisé par le fait que le siège (19) est disposé sur un cadre-support (22) qui peut être déplacé vers l'avant dans des rails (23) prévus sur le plancher de véhicule (3), dans la région de la cavité(18).

7. Agencement de siège selon la revendication 6, caractérisé par le fait que le cadre-support (22) est agencé sous forme de plateau (24) pouvant se déplacer sur des galets et/ou dans des rails.

8. Agencement de siège selon une des revendications 5 à 7, caractérisé par le fait que le siège (19) est pourvu d'une partie assise (21) qui peut être repliée vers le haut contre son dossier (20) et peut coulisser vers l'avant aux fins d'augmenter la surface de chargement, le dossier (20), dans la position coulissée vers l'avant, pouvant être amené et bloqué dans une position verticale.

9. Agencement de siège selon une des revendications 1 à 8, caractérisé par le fait qu'il est prévu pour supporter l'axe transversal (8), des rails de guidage (11) qui s'étendent de chaque côté de la partie assise (6), dans la direction longitudinale du véhicule (1), et sont fixés fermement au plancher de véhicule (3).

10. Agencement de siège selon une des revendications 1 à 9, caractérisé par le fait que l'axe transversal (8) s'étend sur toute la largeur de la partie assise (6) et est lié aux deux extrémités à un élément de guidage (12) guidé coulissant dans les rails de guidage (11).

11. Agencement de siège selon une des revendications 1 à 10, caractérisé par le fait que l'axe transversal (8), aux deux extrémités, porte au moins un galet (13) monté tournant et que les rails de guidage (11) associés sont agencés pour recevoir lesdits galets (13).

12. Agencement de siège selon la revendication 10, caractérisé par le fait que les rails de guidage (11), en section transversale, ont un profil sensiblement en forme de C.

13. Agencement de siège selon une des revendications 1 à 12, caractérisé par le fait que l'axe transversal (8) est lié fermement à un cadre (14) du siège (4), les éléments de guidage (12) étant montés tournants sur l'axe transversal (8).

14. Agencement de siège selon une des revendications 1 à 12, caractérisé par le fait que l'axe transversal (8) d'une part est lié fermement aux éléments de guidage (12) et de l'autre est lié avec possibilité de rotation au cadre (14).

15. Agencement de siège selon une des revendications 1 à 14, caractérisé par le fait que le dossier (5), dans la position d'utilisation, peut être verrouillé en plus à la partir assise (6) au niveau du point de liaison.

16. Agencement de siège selon la revendications 15, caractérisé par le fait que le moyen de verrouillage est formé de moyens connus en eux-mêmes tels que des cliquets, des axes d'encliquetage ou des verrous.
